Europäisches Patentamt

European Patent Office

Office européen des brevets

(11) Publication number: **0 492 582 A2**

# EUROPEAN PATENT APPLICATION

(21) Application number: **91122121.6**

(22) Date of filing: **23.12.91**

(51) Int. Cl.⁵: **C08G  63/189**

(30) Priority: **24.12.90 IT 2253890**

(43) Date of publication of application:
**01.07.92 Bulletin  92/27**

(84) Designated Contracting States:
**BE DE DK ES FR GB NL SE**

(71) Applicant: **ISTITUTO GUIDO DONEGANI S.p.A.**
**4, Via Fauser**
**I-28100 Novara(IT)**

(72) Inventor: **Po, Riccardo, Dr.**
**20, Via Rosmini**
**I-28100 Novara(IT)**
Inventor: **Cioni, Paolo, Dr.**
**15, Via Ballario**
**I-28100 Novara(IT)**
Inventor: **Occhiello, Ernesto, Dr.**
**13, Corso Cavallotti**
**I-28100 Novara(IT)**
Inventor: **Garbassi, Fabio, Dr.**
**6, Via C. Porta**
**I-28100 Novara(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**W-8000 München 40(DE)**

(54) **Copolyesters having an improved combination of properties.**

(57)  Described are copolyesters having an improved combination of barrier, mechanical, thermal and rheological properties and consisting of acylic and glycolic radicals, wherein the acylic radicals derive from at least isophthalic acid and 2,6-naphthalene dicarboxlyic acid and at least 90% by mols of the glycolic radicals derive from ethylene glycol.

The present invention relates to amorphous copolyesters having an improved combination of properties.

More in particular, the present invention relates to copolyesters which have an excellent combination of barrier, mechanical, thermal and rheological properties and are particularly suitable for use in the packaging of foodstuffs.

The thermoplastic polyesters and, in particular, polyethylene terephthalate (PET) are polymers which are widely used in the field of packaging foodstuffs, pharmaceuticals and chemicals, due to their generally good mechanical and barrier properties and their being in compliance with the regulations in the nutritional section.

It is known, however, that for a few types of nutrients, such as e.g. wine and beer, the barrier properties of PET and of other polyesters and copolyesters towards oxygen are not satisfactory. As is inferable from the maximum tolerance values of foodstuffs to oxygen reported by M. Salame in "Plastic Film Technology" (K.M. Finlayson Ed., Technomic, Lancaster 1989), in order to store wine or beer for at least 120 days in 1-liter bottles, materials having permeabilities which are by 2 to 4 times lower than that of PET are required.

Another limitation exhibited by PET resides in the difficulty of utilizing, for the molding of hollow containers, the blow molding technology, since the viscosity of the molten polymer is not high enough. For this reason, hollow bodies made of PET are produced by means of an initial injection molding of a cylindrical parison, which is then stretched and blown at a temperature above the glass transition temperature in order to form the final container.

Furthermore, according to G.W. Halek in Journal of Polymer Science, Polymer Symposia (vol. 74, pages 83-92, 1986), the high PET processing temperatures, exceeding 270°C, give rise to the formation of acetaldehyde, which, even in very low concentrations, imparts a disagreeable aftertaste to foodstuffs.

Several attempts have been made in order to overcome one or more of the above drawbacks. Thus, for example, for improving the melt flow characteristics of the molten polyesters in order to make them moldable by blow molding, it has been proposed, in US-A-4,234,708 and 4,554,328, to use polyesters based on terephthalic acid and ethylene glycol containing cross-linking agents and chain terminators. A different approach for solving the problem of flowability is suggested in US-A-4,093,606 and 4,398,022, which describe amorphous copolyesters containing cyclohexane dimethanol units. These copolyesters are moldable at a lower temperature as compared with the PET homopolymer, thereby achieving more favourable flowability conditions.

As regards the improvement of the barrier properties of the polyesters, it is known from the art that polyethylene isophthalate (PEI) and corresponding copolyesters having a predominant content of isophthalic radicals exhibit a lower permeability to oxygen than PET. US-A-4,578,437 describes mixtures of PEI with other copolyesters of terephthalic acid, for which mixtures a permeability to carbon dioxide lower than that expectable from a proportional trend was observed. In such mixtures, however, the permeability to oxygen seems to be essentially proportional to the content of isophthalic units. US-A-4,398,017, 4,622,268 and 4,388,456 describe isophthalic acid copolyesters having improved barrier properties and containing, respectively, also units derived from aromatic or alkylaromatic diols, aromatic hydroxyacids and dicarboxy phthalimides. Lastly, US-A-4,403,090 describes copolyesters having glass transition temperatures (Tg) lower than or equal to 70°C, prepared from mixtures of isophthalic acid with up to 50% of a different diacid. In particular, in example 4 of said patent, a copolymer is described which is obtained by starting from ethylene glycol and from a mixture of dimethyl isophthalate and 15% by mols of dimethyl-2,6-naphthalene dicarboxylate. Said copolymer, the permeability to oxygen thereof being a little lower than that of PEI and the $T_g$ thereofbeing 67°C, could not be utilized for the production of articles which are to be subjected to the thermal cycles of the food industry, some of which being above the threshold of 70°C.

Accordingly, it is an object of the present invention to provide copolyesters endowed with an excellent combination of barrier, thermal, rheological and mechanical properties, which make them particularly suitable for use in the packaging of foodstuffs and, in particular, of products such as wine and beer.

A further object of the present invention is to provide copolyesters having a permeability to oxygen lower than 1.5 ($cm^3$.mm/$m^2$.24 hr.atm.) and a glass transition temperature equal to or higher than 70°C.

More in particular, it is an object of the present invention to provide copolyesters having excellent barrier properties, suited for the production of formed articles capable of with-standing the thermal cycles of the food industry.

It has now been found that these and still further objects can be achieved by amorphous thermoplastic copolyesters consisting of acyl and glycol radicals, in which the acyl radicals derive from at least isophthalic acid and 2,6-naphthalene dicarboxylic acid, the latter being present in amounts of at least 20% by mols referred to the total of the acyl radicals, and at least 90% by mols of the glycol radicals derive from ethylene glycol.

Preferred amorphous copolyesters may be prepared by reacting an acid component and a glycol component, the acid component essentially consisting of 50 to 80% by mols of isophthalic acid and/or derivatives thereof and of 50 to 20% by mols of 2,6-naphthalene dicarboxylic acid and/or derivatives thereof, and the glycol component comprising ethylene glycol in an amount of from 90 to 100% by mols, referred to the total of the glycols, and 10 to 0% by mols of other aliphatic or cycloaliphatic glycols.

Still a further object of the present invention are formed articles such as, for example, hollow containers, sheets, plates and films, which are produced by starting from said copolyesters.

The above term "derivatives" is to denote acyl halides, (preferably $C_1$-$C_4$) esters and anhydrides of the corresponding diacids and oligomers of the dicarboxylic acids with ethylene glycol, optionally in admixture with up to 10% by mols of other aliphatic or cycloaliphatic glycols.

It is possible to add to the acid component also one or more other dicarboxylic acids and/or derivatives thereof, said acids being of aliphatic or aromatic nature and different from the two preceding acids. Usually said acids are added in an amount of from 0 to 5% by mols, referred to the sum of the other two (essential) acids.

Most preferably, the acyl radicals of the copolyesters of the present invention essentially derive from 60 to 80% by mols of isophthalic acid and/or derivative(s) thereof and from 40 to 20% by mols of 2,6-naphthalene dicarboxylic acid and/or derivatives thereof. The optionally added dicarboxylic acids and/or derivatives thereof are usually present in an amount of from 0 to 2% by mols, based on the sum of the other two acids.

Any third dicarboxylic acid (derivative) can be added to the acid component as a function of the particular final characteristics to be imparted to the copolyesters of the present invention. In particualr, the following dicarboxylic acids are preferred: terephthalic, 4,4'-diphenyldicarboxylic, 1,3-phenylene dioxydiacetic, cyclohexane dicarboxylic, 4,4'-oxydibenzoic, 1,4-phenylene dioxydiacetic, succinic, adipic, decandioic, dodecandioic and p-hydroxybenzoic acids.

Any aliphatic or cycloaliphatic (preferably ($C_3$-$C_{10}$) glycol can be utilized in addition to ethylene glycol in the glycol component of the copolyesters of the present invention. The preferred ones are: diethylene glycol, propylene glycol, hexane-diol, butanediol, 1,4-cyclohexane dimethanol, 1,3-cyclohexane dimethanol, meta- and para-xylylene diols and polyethylene glycols having an (average) molecular weight of up to 1,000.

The copolyesters of the present invention may be prepared by means of a polycondensation reaction, where the diacid component and the glycol component are reacted in proper proportions and under suitable conditions, optionally in the presence of a catalyst, in accordance with what is generally described in the art, e.g., by F. Pilati in "Comprehensive Polymer Science", G.C. Eastmond et Al. Eds., Pergamon Press, Oxford 1989, vol. 5, page 275 ff. Among the various preparation methods described, there are preferred the two-step methods which comprise the melt polycondensation of the dicarboxylic acids (esterified with $C_1$-$C_6$ aliphatic alkyl groups) with ethylene glycol (either alone or in admixture with other glycols), added in an excess of 50 - 120% by mols referred to the diacid component.

In a typical preparation starting from the methyl diesters of dicarboxylic acids and ethylene glycol, the reaction mixture, which also contains the catalyst, is degassed, placed in an inert atmosphere and heated to 180 - 200°C, at which temperature the methanol (released during the alcoholysis reaction) distills. The temperature is then gradually raised up to 280 - 290°C while the pressure is lowered to 0.1 - 0.5 torr in order to favour the distillation of the excess glycol and the polycondensation with resulting formation of the polymer.

Useful catalysts for preparing the copolyesters of the present invention can be various compounds of acidic nature such as, for example, protic acids such as sulphuric acid and p-toluenesulphonic acid, and Lewis acids such as zinc, manganese, cobalt or lead acetates and, furthermore, acidic oxides such as antimony or germanium oxides. It also is possible to use alcoholates of transition metals such as tetraisopropyl titanate. For preparing the copolyesters of the present invention it is preferable to use catalytic systems consisting of mixtures of antimony oxide and zinc, cobalt and/or manganese acetates, which, at the polymer processing temperatures, are less active in the catalysis of the acetaldehyde formation reaction and do not lead to the formation of colored products.

The copolyesters of the present invention are characterized by oxygen permeability values (measured according to manometric method ASTM D 1434, at 25°C and 0% of relative humidity) lower than 1.5 ($cm^3$.mm/$m^2$.24 hr.atm.) and preferably equal to or lower than 1.0 ($cm^3$.mm/$m^2$.24 hr.atm.).

Furthermore, they surprisingly exhibit permeability values significantly lower than those which can be calculated by means of linear interpolation between the permeability values of the polyesters obtained, under the same preparation conditions, from each of the constituents of the acid component, taken individually.

The copolyesters of the present invention usually have inherent viscosities (determined on solutions of about 0.25 g/dl of polymer in a phenol/1,1,2,2-tetrachloroethane 60/40 by weight mixture, at 30°C) ranging from 0.5 to 1.5 dl/g and preferably ranging from 0.6 to 1.2 dl/g. Said inherent viscosity values can be obtained preferably by direct melt polymerization, without any upgrading of the polymer in the solid state, with a consequent simplification of the production process.

The rheological behaviour of the copolyesters of the present invention is similar to that of the polyesters generally utilized in extrusion blow molding processes. In particular, said copolyesters are characterized by melt viscosities, at a shear rate equal to zero, measured at the molding temperature, higher than 500 Pa.s and, preferably, higher than 1,000 Pa.s, and by an evident decrease of the melt viscosity as the shear rate increases, contrary to what happens in the case of PET, where the variation is very small.

Lastly, the copolyesters of the present invention are capable of meeting the thermal stability requirements for the use of polymeric containers in the food industry, where filling operations in hot condition are frequently encountered. In particular, they are characterized by glass transition temperatures, measured by differential scanning calorimetry (DSC), equal to or higher than 70°C, and therefore they are in line with the thermal behaviour of PET, generally considered as sufficient for many applications.

The copolyesters of the invention can also contain one or more additives such as dyes, pigments, plasticizers, antioxidants, stabilizers, etc., utilized in the amounts generally known in the art. Said additives can be added either directly to the reaction mixture or to the final polymer.

The copolyesters of the present invention can be formed by means of conventional technologies, in particular for producing hollow containers, films and sheets. Furthermore, they are utilizable along with other polymeric materials for producing bonded laminates or other multilayer articles or for obtaining mixtures. The copolyesters of the present invention can be co-extruded between two or more layers of polymers in order to impart barrier properties to the bonded article obtained.

The containers prepared from the copolyesters of the present invention are particularly suitable for the protection of foodstuffs, medicaments and similar substances. The advantages of such containers are substantially due, in said applications, to the low permeability to oxygen as compared with PET.

The following examples are given to better illustrate the present invention, but they are in no way to be considered as a limitation of the scope thereof.

The polyesters mentioned or described in the examples are characterized by one or more of the parameters, the symbol, name and method of measurement whereof are given hereinafter.

Perm(O$_2$):  permeability to oxygen, measured on thermocompressed specimens measuring 100 x 100 x 0.5 mm, using a Lyssy L100-3001 apparatus. The measurements were made at a temperature of 25°C and at 0% of relative humidity according to the manometric method (ASTM D-1434).

T$_g$:  glass transition temperature, measured by means of differential scanning calorimetry (DSC) on a Perkin Elmer DSC-7 apparatus using 8-12 mg specimens.

Vis$_{in}$:  inherent viscosity, determined on polymer solutions at a concentration of about 0.25 g/dl in a phenol/1,1,2,2-tetrachloroethane 60/40 by weight mixture, at a temperature of 30°C.

Vis$_f$:  melt viscosity, measured by means of a capillary rheometer Rheograph-2001 using a capillary tube having a diameter of 1.0 mm. Unless otherwise specified, the measurement was made at 230°C.

Before any extrusion or molding operations, all the polyesters and copolyesters were dried under vacuum (10 torr) for 24 hours at temperatures ranging from 70 to 100°C, in accordance with the general practice in the art.

## EXAMPLE 1 (COMPARATIVE)

Into a 500 ml glass flask there were introduced, under an inert atmosphere, 165.0 g of dimethyl isophthalate, 111.1 g of ethylene glycol, 428 mg of zinc acetate dihydrate and 81 mg of antimony trioxide. The reaction mixture was brought to 180°C and maintained at this temperature for about 90 minutes, during which the methanol distillation began. The temperature was then gradually raised to 240°C, while continuing the removal of methanol. Vacuum was then applied unitl reaching a pressure of 0.1 torr and the temperature was raised up to 290°C. Said conditions were maintained for a further 30 minutes, during which the excess ethylene glycol was distilled off in order to promote the polycondensation reaction and the increase of the molecular weight of the polyester. On conclusion of the reaction, a polyethylene isophthalate having a Vis$_{in}$ of 0.41 dl/g was obtained. The permeability characteristics thereof are reported in the table below.

## EXAMPLE 2 (COMPARATIVE)

A polymerization was conducted under the conditions of comparative example 1, but using a reaction mixture consisting of 98.2 g of dimethyl-2,6-naphthalene-dicarboxylate, 52.8 g of ethylene glycol, 205 mg of zinc acetate dihydrate and 40 mg of antimony trioxide, and raising the final temperature to 300°C instead of to 290°C. On conclusion of the reaction, a polyethylene-2,6-naphthalene dicarboxylate (PEN) having a $Vis_{in}$ of 0.64 dl/g was obtained. The permeability characteristics thereof are reported in the table below.

### EXAMPLE 3 (COMPARATIVE)

The procedure of comparative example 2 was followed, but using 70.0 g of dimethyl terephthalate, 70.0 g of dimethyl isophthalate, 94.0 g of ethylene glycol, 363 g of zinc acetate dihydrate and 67 mg of antimony trioxide. On conclusion of the reaction, a polyethylene-(terephthalate-isophthalate) having a $Vis_{in}$ of 0.70 dl/g was obtained. The permeability characteristics thereof are reported in the table below.

### EXAMPLE 4

The procedure of comparative example 1 was repeated, using 42.0 g of dimethyl-2,6-naphthalene dicarboxylate, 98.0 g of dimethyl isophthalate, 88.1 g of ethylene glycol, 345 mg of zinc acetate dihydrate and 64 mg of antimony trioxide. On conclusion of the reaction, a polyethylene-(isophthalate-2,6-naphthalene dicarboxylate) having a $Vis_{in}$ of 0.63 dl/g was obtained. Ther permeability characteristics thereof are reported in the table below.

### EXAMPLE 5

The procedure of comparative example 2 was repeated, using 60.0 g of dimethyl-2,6-naphthalene dicarboxylate, 60.0 g of dimethyl isophthalate, 72.3 g of ethylene glycol, 280 mg of zinc acetate dihydrate and 52 mg of antimony trioxide. On conclusion of the reaction, a polyethylene-(isophthalate-2,6-naphthalene dicarboxylate) having a $Vis_{in}$ of 0.67 dl/g, a melt viscosity of 1,800 Pa.s at a shear rate of 10 $s^{-1}$, and of 500 Pa.s at a shear rate of 1,000 $s^{-1}$ was obtained. The permeability characteristics thereof are reported in the table below.

### EXAMPLE 6

Into a stainless steel AISI-304 reactor there were introduced, under an inert nitrogen atmosphere, 4,200 g of dimethyl-2,6-naphthalene dicarboxylate, 2,360 g of ethylene glycol, 0.85 g of manganese acetate tetrahydrate and 0.75 g of cobalt acetate tetrahydrate. The mixture was brought to 180°C and the methanol released during the alcoholysis reaction was distilled off. The temperature was then raised to 220°C, and 0.72 g of phosphorous acid and 36 g of stabilizer IRGANOX® 1010 (CIBA GEIGY) were introduced into the reactor, followed by 9,779 g of polyethylene isophthalate oligomers, (ethylene glycol/isophthalic acid ratio equal to 1.73) and 4.0 g of antimony trioxide. Subsequently, the pressure was lowered to 0.5 torr, the temperature was raised to 280°C and the reaction was continued for three hours, progressively distilling off the excess ethylene glycol. On conclusion of the reaction, a polyethylene-(isophthalate-2,6-naphthalenedicarboxylate) having a $Vis_{in}$ of 0.87 dl/g was obtained. The permeability characteristics thereof are reported in the following table.

TABLE

| EXAMPLE | $T_g$ (C) | Perm ($0_2$) ($cm^3$.mm/$m^2$.24hr.atm) |
|---|---|---|
| Ex. 1* | 59 | 1.40 |
| Ex. 2* | 120 | 1.70 |
| Ex. 3* | 65 | 2.30 |
| Ex. 4 | 73 | 1.10 |
| Ex. 5 | 80 | 1.30 |
| Ex. 6 | 73 | 0.50 |

* Comparative examples.

## Claims

1. Copolyesters derived from glycols and aromatic and,optionally, aliphatic carboxylic acids, comprising units derived from isophthalic acid and 2,6-naphthalene dicarboxylic acid, the latter being present in amounts of at least 20% by mols referred to the sum of all acid-derived units present, at least 90% by mols of the glycol-based units being derived from ethylene glycol.

2. Copolyesters according to claim 1, having oxygen permeability values lower than 1.5, preferably equal to or lower than 1 $cm^3.mm/m^2.24$ hr.atm., measured according to ASTM D-1434 at 25°C and 0% of relative humidity.

3. Copolyesters according to any one of claims 1 and 2, having an inherent viscosity ranging from 0.5 to 1.5 dl/g, and preferably from 0.6 to 1.2 dl/g, determined on polymer solutions at a concentration of about 0.25 g/dl in a phenol/1,1,2,2-tetrachloroethane 60/40 by weight mixture, at a temperature of 30°C, and a melt viscosity at a shear rate equal to zero, measured at the molding temperature, higher than 500 Pa.s, preferably higher than 1,000 Pa.s.

4. Copolyesters according to any one of the preceding claims, wherein 50 to 80% by mols of the acid-based units are derived from isophthalic acid and/or derivatives thereof, 50 to 20% by mols of the acid-based units are derived from 2,6-naphthalene dicarboxylic acid and/or derivatives thereof, 90 to 100% by mols of the glycol-based units are derived from ethylene glycol and 10 to 0% by mols of the glycol-based units are derived from other aliphatic and/or cycloaliphatic glycols.

5. Copolyesters according to any one of the preceding claims, wherein up to 5% by mols of the acid-based units are derived from aliphatic and/or other aromatic dicarboxylic acids and/or derivatives thereof.

6. Copolyesters according to any one of the preceding claims, wherein the acid-based units are derived from 60 to 80% by mols of isophthalic acid and/or derivatives thereof; 40 to 20% by mols of the acid-based units are based on 2,6-naphthalene dicarboxylic acid and/or derivatives thereof; and 0 to 2% by mols, referred to the sum of said acids, of the acid-based units are derived from dicarboxylic acids and/or derivatives thereof which are of aromatic or aliphatic nature and different from isophthalic acid and 2,6-naphthalene dicarboxylic acid.

7. Copolyesters according to any one of claims 5 and 6, wherein the dicarboxylic acid different from isophthalic acid and 2,6-naphthalene dicarboxylic acid is selected from terephthalic, 4,4'-diphenyl dicarboxylic, 4,4'-oxydibenzoic, 1,4-phenylene dioxydiacetic, 1,3-phenylene dioxydiacetic, cyclohexane dicarboxylic, succinic, adipic, decandioic, dodecandioic and p-hydroxybenzoic acids and mixtures thereof.

8. Copolyesters according to any one of the preceding claims, wherein the aliphatic and cycloaliphatic glycols are selected from diethylene glycol, propylene glycol, hexanediol, butanediol, 1,4-cyclohexane dimethanol, 1,3-cyclohexane dimethanol, meta- and para-xylylene diols, polyethylene glycols having an average molecular weight of up to 1,000, and mixtures of said glycols.

9. Copolyesters according to any one of the preceding claims, wherein the derivatives of the carboxylic acids are acyl halides, esters and anhydrides of said acids, and oligomers of said acids with ethylene glycol, optionally in admixture with up to 10% by mols of other aliphatic and/or cycloaliphatic glycols.

10. Hollow containers, films, sheets, plates and laminated and bonded articles, obtainable from the copolyesters of any one of the preceding claims.